Europäisches Patentamt

European Patent Office

Office européen des brevets

(11) Veröffentlichungsnummer: **0 370 204 A1**

## (12) EUROPÄISCHE PATENTANMELDUNG

(21) Anmeldenummer: **89117953.3**

(22) Anmeldetag: **28.09.89**

(51) Int. Cl.5: **B28D 1/14**

(30) Priorität: **24.11.88 DE 3839617**

(43) Veröffentlichungstag der Anmeldung:
**30.05.90 Patentblatt 90/22**

(84) Benannte Vertragsstaaten:
**AT BE CH DE ES FR GB IT LI NL**

(71) Anmelder: **fischerwerke Artur Fischer GmbH & Co. KG**
**Weinhalde 14 - 18**
**D-7244 Waldachtal 3/Tumlingen(DE)**

(72) Erfinder: **Fischer, Artur, Prof. Dr. h. c.**
**Weinhalde 34**
**D-7244 Waldachtal 3/Tumlingen(DE)**

(54) **Vorrichtung zur Herstellung einer Hinterschneidung in einem Bohrloch.**

(57) Zur Herstellung von Hinterschneidungen in einem Bohrloch wird ein Schaft in einem Führungsrohr geführt, der ein ausschwenkbares Schneidelement unter axialem Druck nach außen schwenkt.

Fig.2

EP 0 370 204 A1

## Vorrichtung zur Herstellung einer Hinterschneidung in einem Bohrloch

Die Erfindung betrifft eine Vorrichtung zur Herstellung einer Hinterschneidung in einem Bohrloch gemäß der Gattung des Hauptanspruchs.

Aus der DE-OS 23 49 998 ist es bekannt, zur Verankerung von Befestigungselementen mit Spreizkörper Bohrlöcher mit einer Hinterschneidung zu versehen. In die Hinterschneidung kann das Spreizteil des Befestigungselements formschlüssig eingreifen, wodurch in harten Werkstoffen, beispielsweise in Betonmauerwerk, eine besonders sichere Befestigung erreicht wird. Bei der bekannten Vorrichtung wird die Hinterschneidung durch ein Ausschwenken der Bohrvorrichtung erzielt. Die Ausführung einer Schwenkbewegung erfordert eine gewisse Übung und es sind spezielle Maßnahmen erforderlich, um zu gewährleisten, daß die zu erstellenden Hinterschneidungen auch tatsächlich vollständig und gleichmäßig ausgebildet sind.

Der Erfindung liegt die Aufgabe zugrunde, eine Vorrichtung zur Herstellung einer Hinterschneidung zu schaffen, die keine Schwenkbewegung des verwendeten Bohrgeräts erfordert.

Die Lösung dieser Aufgabe wird bei einer Vorrichtung der eingangs genannten Gattung durch die im Hauptanspruch angegebenen Merkmale erhalten. Ein in einem Führungsrohr befindlicher Schaft besitzt an seinem vorderen Ende ein schwenkbares Reibelement, welches durch axialen Druck auf den Schaft radial am Führungsrohr ausschwenkt, so daß das Reibelement mit seiner Seitenschneide an der Bohrlochwandung angreift und unter Rotation die Hinterschneidung ausreibt.

Damit das Reibelement, welches vorzugsweise als schwenkbare Platte ausgebildet ist, eine gute seitliche Führung erhält, kann das Führungsrohr an seinem unteren Ende als längsgeschlitzter Stab ausgebildet sein. Im Bereich des Längsschlifzes ist das Führungsrohr somit massiv ausgebildet, wodurch die Seitenwandungen des Längsschlitzes die gewünschte seitliche Führung für das Reibelement bilden. Die beim Ausreiben der Hinterschneidung auftretenden Querkräfte werden dadurch optimal in das Führungsrohr eingeleitet. Außerdem kann das beim Herstellen der Hinterschneidung anfallende Bohrmehl ungehindert stirnseitig an dem Längsschlitz austreten, so daß problemlos hintereinander mehrere Hinterschneidungen hergestellt werden können, da ein Verstopfen oder eine sonstige Behinderung durch das anfallende Bohrmehl im Bereich des Reibelements sicher vermieden wird.

Das Reibelement kann an seiner der Schneide abgewandten Rückseite eine Führungskurve aufweisen, die an einem quer durch den Längsschlitz verlaufenden Bolzen anliegt. Wird der Schaft nach unten im Führungsrohr gedrückt, so drückt dabei der Bolzen das Reibelement radial nach außen. Der axial auf den Schaft ausgeübte Druck wird dadurch in eine radiale Kraftkomponente im Bereich der Seitenschneide des Reibelements umgesetzt.

Am Führungsrohr kann ein Führungsbund ausgebildet sein, der im Außendurchmesser an den Durchmesser der Bohrung angepaßt ist, in der eine Hinterschneidung hergestellt werden soll. Der übrige Durchmesser des Führungsrohrs ist somit geringfügig gegenüber dem Bohrlochdurchmesser reduziert, wodurch das Einführen des Führungsrohres und damit der gesamten Vorrichtung in das Bohrloch erleichtert wird. Diese Maßnahme erleichtert das Einführen der Vorrichtung insbesondere in gekrümmte Bohrlöcher.

Eine vorteilhafte Weiterbildung der Erfindung sieht vor, daß der Tiefenanschlag in der Höhe verstellbar ist. Durch diese Maßnahme ist es möglich, mit ein und derselben Vorrichtung Hinterschneidungen in definierter Tiefe eines Bohrlochs herstellen zu können.

Weiterhin ist es auch vorteilhaft, unterhalb des Tiefenanschlags eine frei drehbare Lagerscheibe vorzusehen, die beim Ausreibvorgang die Bohrlochmündung vor Beschädigungen schützt.

Besonders vorteilhaft ist es weiterhin, wenn der Schaft mittels Federkraft in eine obere Endstellung im Führungsrohr vorgespannt ist. Bei der Herstellung der Hinterschneidung wird von der Bedienungsperson der Schaft gegen die Federkraft in das Führungsrohr eingeschoben, wobei die Feder Vibrationen und Stöße dämpft. Vorzugsweise wird hierfür eine als Schraubenfeder ausgebildete Druckfeder verwendet, die das Führungsrohr im oberen Bereich umschließt und zwischen einem am Schaft und einem am Führungsrohr ausgebildeten Stützlager eingespannt ist.

Die Erfindung wird nachfolgend anhand der Zeichnung näher erläutert.

Es zeigen:

Figur 1 eine erfindungsgemäße Vorrichtung im unbelasteten Zustand,

Figur 2 eine zu der in Figur 1 dargestellten Seitenansicht um 90 ° gedrehte Seitenansicht, wobei der Schaft der Vorrichtung nach unten gedrückt ist, und

Figur 3 den Schaft, wie er bei den in Figur 1 und in Figur 2 dargestellten Vorrichtungen verwendet ist mit Reibelement.

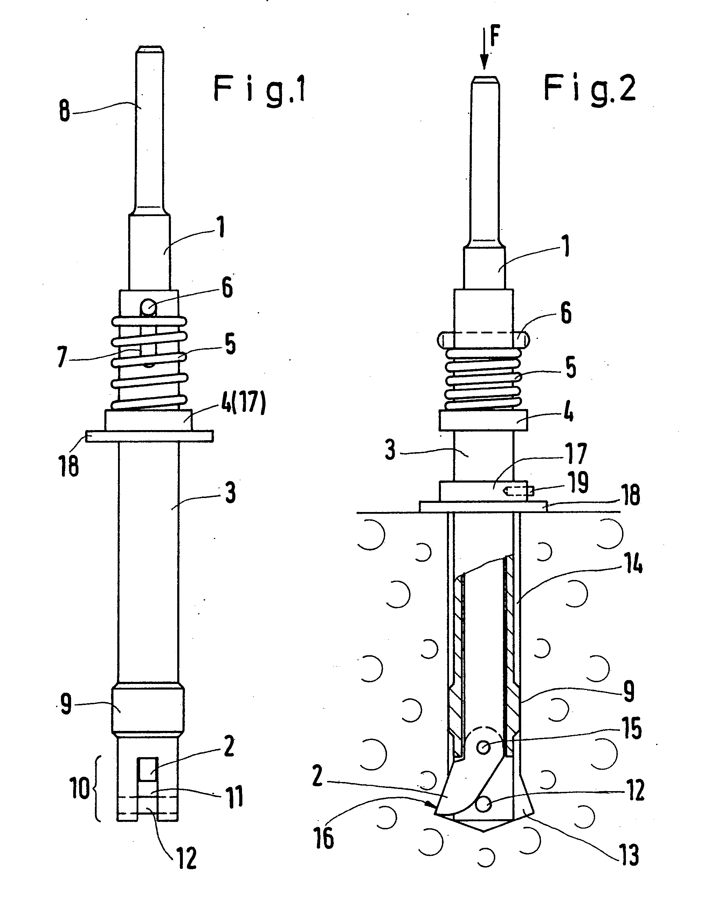

Die in Figur 1 dargestellte Vorrichtung besteht aus einem Schaft 1 mit Reibelement 2 und einem Führungsrohr 3 mit daran befestigtem Ring 4, an dem sich eine hier vereinfacht dargestellte Druckfeder 5 abstützt. Am anderen Ende der Druckfeder 5 bildet ein Querstift 6 ein Stützlager für die Druckfeder 5. Der Querstift 6 ist in einem Langloch 7 des Führungsrohrs 3 geführt und befindet sich in Figur 1 in der oberen Endlage.

Am oberen Ende des Schaftes 1 kann dieser mit seinem verjüngten Schaftteil 8 in ein Bohrfutter oder dergleichen einer Bohrmaschine eingespannt werden.

Im unteren Bereich des Führungsrohrs 3 ist ein überstehender Führungsbund 9 ausgebildet, dessen Durchmesser dem Bohrlochdurchmesser entspricht, in welchem eine Hinterschneidung herzustellen ist. Dabei kann es zweckmäßig sein, den Durchmesser des Führungsbundes 9 geringfügig kleiner auszubilden, als den Bohrlochdurchmesser, um ein ungehindertes Einführen des Führungsrohres in das Bohrloch zu gewährleisten.

Das untere Ende des Führungsrohres 3 ist als längsgeschlitzter Stababschnitt 10 ausgebildet. Die Breite des Längsschlitzes 11 ist an die Breite des Reibelements 2 angepaßt, so daß die gegenüberliegenden Seitenwände des Längsschlitzes 11 Führungsflächen für das Reibelement 2 darstellen. Am unteren Ende ist ein quer durch den Längsschlitz 11 geführter Bolzen 12 angeordnet, der beim Nachuntendrücken des Schaftes 1 das Reibelement 2 seitlich aus dem Führungsrohr herausdrückt, wie dies in Figur 2 dargestellt ist.

Bei der in Figur 2 dargestellten Vorrichtung ist der Schaft 1 mit einer Kraft F nach unten gedrückt und hat bereits eine Hinterschneidung 13 am Bohrlochgrund eines Bohrloches 14 mit seinem Reibelement 2 ausgerieben. Beim Ausreibvorgang wird der Schaft 1 mittels einer hier nicht dargestellten Bohrvorrichtung in Rotation versetzt, wobei sich das Führungsrohr 3 und auch das schwenkbar am Schaft 1 befestigte Reibelement 2 mitdrehen. Das Reibelement 2 ist als schwenkbare Platte ausgebildet und mittels eines Lagerstiftes 15 am unteren Ende des Schaftes 1 befestigt. Die seitlich überstehende Schneide 16 des Reibelements 2 kann mit einer Hartmetallplatte bestückt sein, die die eigentliche Schneide bildet.

Die Druckfeder 5 ist in Figur 2 durch Anwendung der Kraft F zusammengedrückt. Wird die Kraft F nicht mehr aufgebracht, so drückt die Druckfeder 5 den Bolzen 6 und damit den gesamten Schaft 1 nach oben in die obere Endstellung, die durch die Länge des Langlochs 7 bestimmt ist. Dabei zieht sich das Reibelement 2 wenigstens teilweise in den röhrenförmigen Abschnitt des Führungsrohres 3 zurück, so daß die Seitenschneide 16 nicht mehr seitlich übersteht.

In Figur 2 ist die Vorrichtung zusätzlich mit einem höhenverstellbaren Tiefenanschlag 17 versehen, an dessen Unterseite eine Lagerscheibe 18 anliegt. Der Tiefenanschlag 17 kann mittels einer Arretierschraube 19 in jeder gewünschten Position am Führungsrohr 3 festgeklemmt werden. In Figur 2 wird der Tiefenanschlag 17 von dem starr mit dem Führungsrohr 3 verbundenen Ring 4 gebildet.

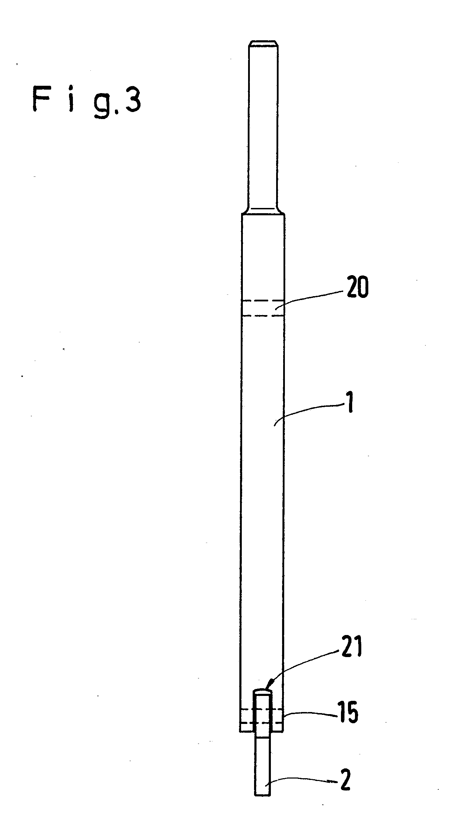

In Figur 3 ist der Schaft 1 separat dargestellt. Dieser besitzt eine obere Durchgangsbohrung 20, die den Querstift 6 (Figur 1 und Figur 2) aufnimmt. Am unteren Ende hält der Lagerstift 15 das um die Achse des Lagerstiftes 15 verschwenkbare Reibelement 2 in einer axial ausgerichteten Lagernut 21. Der Schaft 1 ist ein massives Metallteil. Die übrigen Teile der Vorrichtung sind ebenfalls metallische Teile.

## Ansprüche

1. Vorrichtung zur Herstellung einer Hinterschneidung in einem Bohrloch eines Mauerwerks, die einen an seinem oberen Schaftteil in eine Bohrmaschine einspannbaren Schaft mit einer am unteren Schaftende befindlichen Schneide hat, die beim Ausreiben der Hinterschneidung seitlich am Schaft übersteht, und mit einem Tiefenanschlag versehen ist, **dadurch gekennzeichnet,** daß der Schaft (1) in einem Führungsrohr (3) zwischen einer oberen und einer unteren Endstellung axial verschiebbar geführt ist, daß die Schneide an einem radial aus dem Führungsrohr (3) ausschwenkbaren Reibelement (2) angeordnet ist, und daß die Schneide des Reibelements (2) durch ein Längsverschieben des Schaftes (1) in die untere Endstellung aus dem Führungsrohr (3) seitlich hervortritt.

2. Vorrichtung nach Anspruch 1, **dadurch gekennzeichnet,** daß das Führungsrohr (3) am unteren Ende als längsgeschlitzter, unten offener Stab ausgebildet ist, dessen Längsschlitz (11) die Seitenführung für das Reibelement (2) bildet.

3. Vorrichtung nach Anspruch 2, **dadurch gekennzeichnet,** daß das Reibelement (2) an seiner der Schneide (16) abgewandten Rückseite eine Führungskurve hat, die an einem quer durch den Längsschlitz (11) verlaufenden Bolzen (12) anliegt.

4. Vorrichtung nach einem der vorhergehenden Ansprüche, **dadurch gekennzeichnet,** daß die Schneide (16) aus Hartmetall besteht.

5. Vorrichtung nach einem der vorhergehenden Ansprüche, **dadurch gekennzeichnet,** daß am Führungsrohr (3) zwischen Tiefenanschlag (17) und Reibelement (2) ein überstehender Führungsbund (9) ausgebildet ist.

6. Vorrichtung nach Anspruch 5, **dadurch gekennzeichnet,** daß der Tiefenanschlag (17) in der Höhe verstellbar ist.

7. Vorrichtung nach einem der vorhergehenden Ansprüche, **dadurch gekennzeichnet,** daß eine drehbare Lagerscheibe (18) an der dem Reibelement (2) zugewandten Seite des Tiefenanschlags (17) anliegt.

8. Vorrichtung nach einem der vorhergehenden Ansprüche, **dadurch gekennzeichnet,** daß der Schaft (1) mittels Federkraft in eine obere Endstellung im Führungsrohr (3) vorgespannt ist.

9. Vorrichtung nach Anspruch 8, **dadurch gekennzeichnet,** daß am Schaft (1) ein Querstift (6) vorgesehen ist, der durch am oberen Ende des Führungsrohres (3) ausgebildete, gegenüberliegende Langlöcher (7) hindurchgreift und ein Stützlager für eine das Führungsrohr (3) umschließende Druckfeder (5) bildet, die sich andererseits an einem am Führungsrohr (3) angebrachten Ring (4), Flansch oder dergleichen abstützt.

Fig.1

Fig.2

F i g.3

Europäisches
Patentamt

**EUROPÄISCHER RECHERCHENBERICHT**

Nummer der Anmeldung

| **EINSCHLÄGIGE DOKUMENTE** | | | EP 89117953.3 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) | |
| X | <u>DE - A1 - 3 111 362</u> (DRILLCO DEVICES) | 1,2,6, 7,8,9 | B 28 D 1/14 | |
| A | * Fig. 1-4 * | 5 | | |
| X | <u>FR - A1 - 2 314 009</u> (UPIS) * Fig. 1,3 * | 1,2,8, 9 | | |
| A | | 5,6 | | |
| X | <u>EP - A1 - 0 008 622</u> (BOEHM) * Fig. 4,5 * | 1,2,3, 8,9 | | |
| X | <u>EP - A1 - 0 043 000</u> (LIEBIG) * Fig. 1 * | 1,2,3, 8,9 | | |
| | | | RECHERCHIERTE SACHGEBIETE (Int. Cl.4) | |
| | | | B 23 B B 28 D E 21 B | |
| Der vorliegende Recherchenbericht wurde für alle Patentansprüche erstellt. | | | | |
| Recherchenort WIEN | Abschlußdatum der Recherche 13-11-1989 | | Prüfer GLAUNACH | |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82